# FASCICULE DE BREVET EUROPEEN

(11) **EP 1 543 629 B1**
(45) Date de publication et mention de la délivrance du brevet: **11.03.2009**
(21) Numéro de dépôt: 03797337.7
(22) Date de dépôt: 26.06.2003
(51) Int. Cl.: H04B 1/38

(54) **ETUI IMPERMEABLE POUR APPAREILS ELECTRONIQUES MOBILES**
WASSERDICHTES ETUI FÜR EIN MOBILFUNKGERÄT
WATERTIGHT CASE FOR MOBILE ELECTRONIC DEVICES

(30) Priorité: 18.09.2002 FR 0211528
(43) Date de publication de la demande: 22.06.2005
(73) Titulaire: Texereau, Eric, 56390 Grand-Champ (FR)
(72) Inventeur: TEXEREAU, Rozenn, F-56390 Grand-Champ (FR); TEXEREAU, Eric, F-56390 Grand-Champ (FR)
(74) Mandataire: Bentz, Jean-Paul
(86) Numéro de dépôt international: PCT/FR2003/001967
(87) Numéro de publication internationale: WO 2004/028007

(56) Documents cités:
- WO-A-00/25621

## Description

L'invention se rapporte à un étui en matériau imperméable pour appareils électroniques mobiles, et à une utilisation de cet étui.

Plus précisément, l'étui selon l'invention comprend une housse, une fenêtre et un rabat.

On connaît déjà du document FR 2,791,231, un étui à géométrie variable pour appareils électroniques mobiles, constitué d'une préforme d'étui plane lui permettant une adaptation très facile aux différentes géométries des appareils électroniques. La préforme d'étui se présente sous la forme d'une surface rectangulaire comprenant trois excroissances munies de systèmes de fixation temporaires ou définitifs.

Malheureusement un tel étui ne permet pas d'être étanche à l'humidité et aux intempéries dans la mesure où les excroissances ne permettent pas de recouvrir la totalité du volume de l'appareil mobile, laissant ainsi certaines des parties de l'appareil en contact direct avec l'air.

Il est encore connu du document WO 02/03828 un étui étanche à l'eau et pouvant s'adapter aux différentes géométries d'appareils électroniques mobiles. Cet étui comprend notamment au moins une structure de type soufflet et élastique lui permettant de s'adapter aux formes géométriques des appareils qu'il peut contenir. Cette structure est disposée sur un boîtier essentiellement rigide.

Malheureusement, même si cet étui comprend une structure de type soufflet, il ne permet pas d'épouser parfaitement les contours géométriques de l'appareil électronique, du fait de la présence d'une structure rigide.

Il est également connu par la demande internationale WO 00/25621 un étui de protection pour appareil électronique, ledit étui étant préformé par moulage pour correspondre globalement à la forme d'un appareil. La taille de l'étui est légèrement inférieure à celle de l'appareil de sorte que l'étui est légèrement étiré sur celui-ci. Cet étui comprend une ouverture principale pour l'insertion de l'appareil qui peut être recouverte par un simple rabat qui se fixe contre l'étui au moyen d'une fixation de type « Velcro ». L'étui n'est pas prévu pour s'adapter à différents formats d'appareil et sa fermeture ne permet pas d'assurer une bonne étanchéité.

Aussi il subsiste le besoin de disposer d'un étui constitué d'une pièce unique, non démontable, souple, élastique pouvant épouser parfaitement toutes les formes géométriques de différents appareils électroniques mobiles, tout en restant étanche à l'humidité, aux intempéries, aux projections d'eau et à la poussière, et résistant aux chocs et aux rayures, et tout en permettant une parfaite transmission et réception des sons sans nécessiter de quelconques ouvertures protégées supplémentaires.

L'invention a donc pour objet un étui pour appareils électroniques mobiles présentant des géométries variables.

Cet étui comprend :
- une housse en matériau étanche élastique souple comprenant une face postérieure, de préférence opaque, une face antérieure comprenant une ouverture, une partie supérieure, une partie inférieure ouverte, une première et une seconde parties latérales, ladite housse présentant une portion inférieure s'étendant au-delà de l'appareil à protéger lorsque ledit appareil est inséré dans la housse par ladite partie inférieure ouverte,
- une fenêtre en matériau souple étanche et transparent, de préférence présentant une certaine élasticité, fixée sur l'ouverture de la face antérieure de manière étanche, et
- un rabat assemblé à la housse apte à maintenir la portion inférieure libre contre l'appareil pour fermer la partie inférieure ouverte de manière étanche.

L'étui selon l'invention présente l'avantage d'être léger, peu encombrant et facile d'entretien. De constitution d'ensemble simple, il nécessite peu d'étapes dans sa fabrication et, présente alors un coût de revient assez faible.

Enfin, l'élasticité du matériau qui le constitue lui permet, avec une dimension donnée, de pouvoir s'adapter à bon nombre d'appareils électroniques commercialisés d'une même gamme, généralement de forme globalement parallélépipédique, tels des téléphones portables. Ceci présente l'avantage qu'avec quelques modèles d'étui présentant des dimensions différentes, il est possible de pouvoir protéger la quasi-totalité des appareils électroniques commercialisés.

La longueur de l'étui, à savoir la distance entre la partie supérieure et la partie inférieure ouverte ou ouverture inférieure de la housse, est définie de sorte qu'une portion de la housse reste libre une fois l'appareil inséré dans l'étui. Cet excédent de longueur de housse permet d'adapter l'étui à différentes longueurs d'appareil et permet, par exemple après pliage ou enroulement de la portion libre, d'assurer une bonne étanchéité.

Les différentes faces (postérieure, antérieure) et parties (supérieure, inférieure, latérales) telles que définies précédemment, s'entendent lorsqu'on a introduit un appareil électronique dans l'étui. En effet, l'étui épouse parfaitement ledit appareil, et donc présente alors les formes géométriques, généralement de type parallélépipédique de cet appareil.

Selon une particularité, ledit rabat est apte à maintenir ladite portion libre sous forme pliée ou enroulée pour garantir l'étanchéité.

Avantageusement, la fenêtre transparente s'étend jusqu'à la partie inférieure ouverte ou ouverture inférieure de la housse permettant l'insertion de l'appareil dans l'étui.

Selon un mode de réalisation, le rabat comprend une languette dans le prolongement de la face antérieure, de préférence formée d'une seule pièce avec ladite housse ou la fenêtre, munie à son extrémité libre de moyens de fixation pour sa fixation réversible sur la face postérieure de la housse de sorte que la dite languette maintienne la portion libre sous forme pliée.

Selon un autre mode de réalisation, le rabat comprend une partie intermédiaire assemblée sur la partie inférieure de la face antérieure et destinée à venir contre la portion libre, ladite partie étant suivie d'une languette destinée à s'appliquer sur la face postérieure de la housse de façon à assurer la fermeture étanche de l'étui par maintien de ladite partie intermédiaire contre la portion libre.

Dans un autre un mode de réalisation, le rabat comprend deux bretelles élastiques fixées par une première extrémité sur la housse, de préférence sur la moitié supérieure de la housse, par exemple sur les faces latérales de la housse et à proximité de la partie supérieure, ou sur la partie supérieure, et reliées entre elles à leur seconde extrémité par une partie intermédiaire apte à venir s'appliquer contre la portion libre de la housse, sous l'effet du rappel élastique des bretelles.

De préférence, le rabat peut présenter un évasement destiné à emmailloter la partie inférieure de la housse en vue de sa fermeture étanche. Ladite partie intermédiaire dans les deux modes de réalisation précités est ainsi avantageusement constituée d'un évasement, destiné à emmailloter la partie inférieure de la housse. Le rabat, et en particulier son évasement, est de préférence réalisé en un matériau souple, étanche et élastique.

Avantageusement, la housse comprend une sangle élastique fixée par ses extrémités aux faces latérales pour faciliter le pliage de la portion libre avant la mise en place du rabat.

La housse peut être formée par exemple à partir d'une pièce unique plane, ladite première partie latérale servant de support à une pliure longitudinale de la housse, ladite partie supérieure et ladite seconde partie latérale comprenant une soudure étanche ; à partir d'une pièce unique sous forme de gaine, ladite partie supérieure comprenant une soudure ; à partir de deux pièces planes, ladite partie supérieure et lesdites parties latérales comprenant une soudure ; et, dans le cas d'une fenêtre transparente s'étendant jusqu'à l'ouverture de l'étui, à partir d'une première pièce plane, formant la face postérieure et les parties latérales, et d'une deuxième pièce plane thermosoudée sur la première pièce de façon à former la partie supérieure et la face antérieure.

Lorsque l'étui est vide, c'est-à-dire lorsqu'aucun appareil n'y est présent, il présente une forme plane.

Si l'étui selon l'invention présentait déjà, en étant vide de tout appareil, une forme de type parallélépipédique, l'étanchéité ne pourrait pas être aussi bien assurée facilement du fait de la présence d'une plus grande quantité de soudure ou d'autres moyens de fixation équivalents.

Aussi la forme initiale plane de l'étui limite le nombre des moyens de fixation entre chaque face et chaque partie et, par conséquent garantit une excellente étanchéité des appareils qu'il peut contenir.

L'invention a encore pour objet une utilisation de l'étui, tel que défini précédemment, pour protéger de l'humidité, des intempéries, des chocs, des rayures, de la poussière, des projections d'eau des appareils électroniques généralement de forme globalement parallélépipédique présentant des géométries variables.

Toutefois l'étui selon l'invention ne permet pas de protéger ces appareils électroniques contre une immersion prolongée dans l'eau.

Ces appareils peuvent être choisis parmi des téléphones portables, des récepteurs GPS portables, des récepteurs VHF portables utilisés dans le domaine nautique, des télécommandes de tout instrument présents à bord de bateaux.

La housse de l'étui selon l'invention comprend de préférence au moins une excroissance sensiblement de la forme d'un doigt, disposée sur sa partie supérieure. Cette excroissance peut, selon les appareils électroniques commercialisés, être disposée sur l'un des côtés de cette partie supérieure ou encore en son centre.

La housse et le rabat peuvent être constituées en un matériau identique ou différent comprenant par exemple du polyuréthanne et/ou du polychlorure de vinyle et sont de préférence formés à partir d'une trame de tissu enduite de polyuréthanne ou de polychlorure de vinyle.

La fenêtre peut être constituée en un matériau transparent, tel qu'un polychlorure de vinyle ou un polyuréthanne qui comprend de préférence un agent plastifiant, un agent stabilisant, un agent lubrifiant et/ou un agent anti-ultraviolet. Ce type de matériau présente une épaisseur d'environ 30/100 de millimètre.

L'excroissance peut être constituée en un matériau identique à celui de la housse.

Lorsque la housse comprend une excroissance, cette dernière fait partie intégrante de la housse. Elle est alors découpée dans le même matériau, sans nécessité de soudure ou d'autres moyens de fixation pour l'attacher à la housse.

Le fait que l'excroissance, lorsqu'elle est présente sur la housse, ne nécessite pas de moyens de fixation supplémentaires, permet d'assurer à la fois une étanchéité plus sûre, et une fabrication plus facile de l'étui puisque la housse et l'excroissance font partie du même patron et/ou de la même pièce de tissu.

L'étui selon l'invention peut comprendre tous systèmes classiques pour le transporter, que ce soit des systèmes de fixation au bras par le biais par exemple d'un ou plusieurs passants, ou à la ceinture par le biais par exemple de moyens d'attache connus.

L'invention va maintenant être décrite à l'aide des exemples de réalisation et des figures qui suivent, qui illustrent l'invention sans toutefois en restreindre l'étendue d'une quelconque manière, et dans lesquelles :
- la figure 1 représente une vue schématique tridimensionnelle d'un mode de réalisation de l'étui selon l'invention, en position ouverte,
- La figure 2 représente une vue schématique tridimensionnelle de l'étui de la figure 1, en position fermée,
- La figure 3 représente une vue schématique tridimensionnelle de l'étui de la figure 1, en position ouverte dans lequel on incorpore un téléphone portable,
- La figure 4 représente une vue schématique du rabat avant d'être fixé à la housse de l'étui selon l'invention,
- Les figures 5a, 5B et 5C illustrent un mode de fermeture d'un étui selon l'invention,
- Les figures 6a, 6B et 6C illustrent une variante de réalisation d'un étui selon l'invention ;
- La figure 7 représente une vue schématique tridimensionnelle d'un deuxième mode de réalisation d'un étui selon l'invention, en position ouverte, et,
- Les figures 8A, 8B et 8C illustrent le mode de fermeture de l'étui de la figure 7.

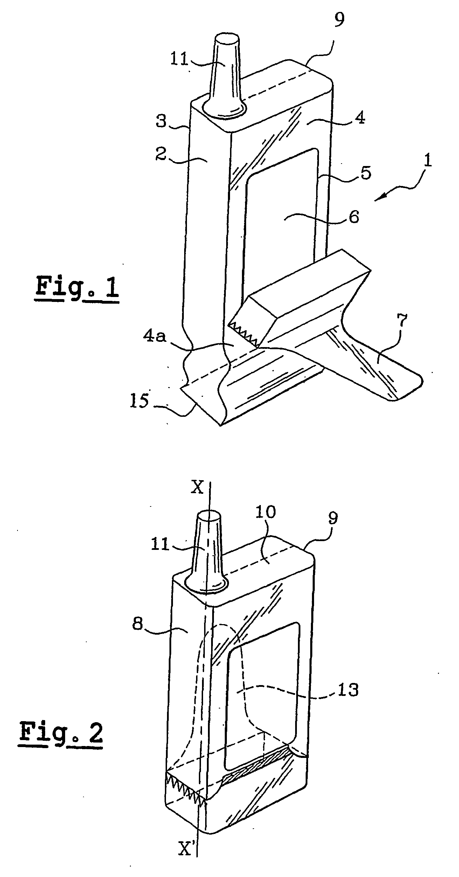

Sur la figure 1, on peut voir l'étui de référence générale 1. Cet étui comprend une housse 2 comprenant une face postérieure 3 opaque à la lumière, une face antérieure 4 comprenant une ouverture 5 obturée par une fenêtre 6.

Les faces postérieure 3 et antérieure 4 sont constituées de polyuréthanne, et peuvent être imprimées par sérigraphie. La fenêtre 6 est constituée de polychlorure de vinyle plastifié et comprenant dans sa structure un agent anti-ultraviolet, transparent et souple permettant ainsi de bien visualiser l'ensemble des touches de l'appareil électronique, et assez mince pour accéder correctement à ces touches, et correctement perméable aux sons.

L'étui 1 comprend en outre un rabat 7 fixé par soudure sur la partie inférieure 4a de la face antérieure 4.

Pour constituer la housse 2, la fenêtre 6 est soudée à l'ouverture, sur tout son périmètre. Les faces postérieure 3 et antérieure 4 sont ensuite pliées selon un axe longitudinal XX' disposé sur la première partie latérale 8, tel que représenté sur la figure 2, puis sont fixées par soudure le long de la seconde partie latérale 9.

La partie supérieure 10 comprend également une soudure qui épouse une partie du contour de l'excroissance 11 destinée à recevoir l'antenne de l'appareil électronique, et ayant sensiblement la forme d'un doigt. La soudure est symbolisée par le trait en pointillé représentée sur la face supérieure 10 de la housse.

Ce type de fixation des différentes parties par soudure permet de conserver un étui parfaitement étanche à l'humidité, aux intempéries, aux chocs, à la poussière, aux rayures, aux projections d'eau.

L'étui selon l'invention peut par exemple présenter les dimensions suivantes :
- longueur : environ 13 cm
- largeur : environ 5 cm
- épaisseur : environ 3 cm

Dans la mesure où, comme il a été expliqué précédemment, l'étui est plan, l'épaisseur qu'il présente dans cet exemple est liée à la présence d'un appareil électronique comprenant de telles dimensions.

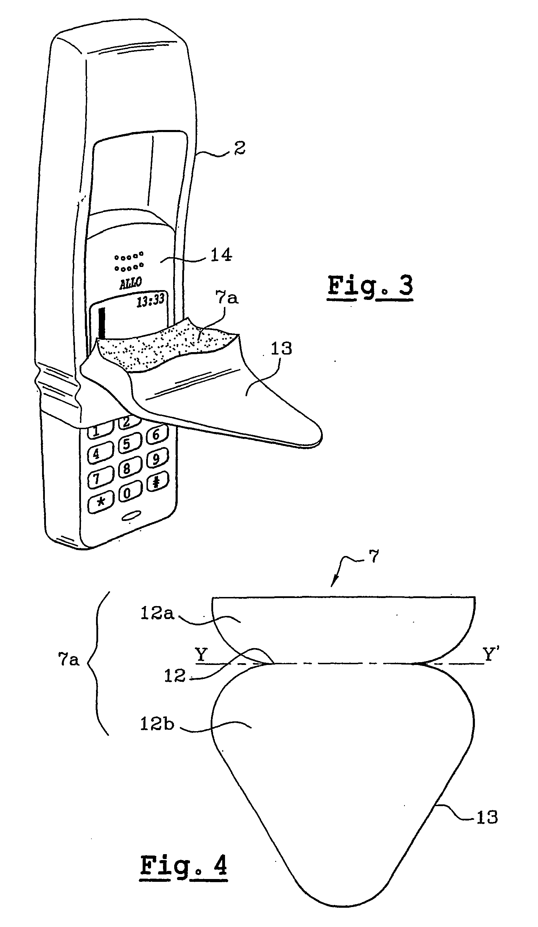

Comme il est représenté sur la figure 4, le rabat 7 comprend un évasement 12 et une languette 13. Les deux parties 12a et 12b constituant l'évasement 12 sont reliées entre elles selon une pliure effectuée selon un axe YY', et sont fixées par une soudure. Cette fixation permet de donner une structure tridimensionnelle à la partie supérieure 7a du rabat 7. Cette structure en trois dimensions permet ensuite d'épouser parfaitement la forme géométrique de la partie inférieure 15 de la housse restée ouverte lors de sa constitution.

La forme tridimensionnelle du rabat 7 permet ainsi de fournir une fermeture parfaitement étanche de la housse lorsqu'il est rabattu sur sa partie inférieure.

Lorsque la partie supérieure 7a du rabat 7 recouvre la partie inférieure 15 de la housse, la languette 13 peut ensuite s'appliquer sur la face postérieure 3 de la housse 2, et peut s'y fixer par tout moyen de fixation adaptable sur du tissu, et par exemple par un système de type «Velcro».

Comme on peut le voir sur la figure 3, lorsqu'on introduit un appareil électronique 14, tel qu'un téléphone portable, dans la housse 2, le tissu élastique de cette dernière en épouse parfaitement les contours. Contrairement aux représentations schématiques des figures 1 et 2 qui comprennent une excroissance 11 destinée à recevoir l'antenne de l'appareil électronique, la représentation de la figure 3 ne comprend aucune excroissance sur la partie supérieure 10 de la housse 2.

La longueur de la housse 2 est telle que, une fois l'appareil électronique 14 inséré dans l'étui par la partie inférieure ouverte ou ouverture inférieure 15, la housse présente une portion restante libre, non plaquée contre l'appareil électronique, qui s'étend au-delà du bord inférieur de l'appareil, ladite portion libre étant formée par des pans libres des faces antérieure 4 et postérieure 3 et des faces latérales 8, 9 de la housse. Les pans libres des faces postérieure et antérieure sont plaqués l'un contre l'autre, en pliant les pans libres des parties latérales, et sont enroulés ensemble. Ensuite, la partie inférieure évasée tridimensionnelle définissant l'évasement 12 est amenée sur la portion libre enroulée et est maintenue contre cette dernière par fixation de la languette 13 sur la face postérieure 3. L'étanchéité de la housse est assurée par l'évasement du rabat et par la portion libre maintenue en position enroulée par le rabat.

L'élasticité du tissu constituant la housse et le rabat permet selon que l'appareil électronique 14 est plus ou moins long, de remonter plus ou moins la languette 13 sur la face postérieure 3 de la housse 2, et par conséquent d'effectuer une parfaite coaptation de l'étui 1 avec l'appareil qu'il contient.

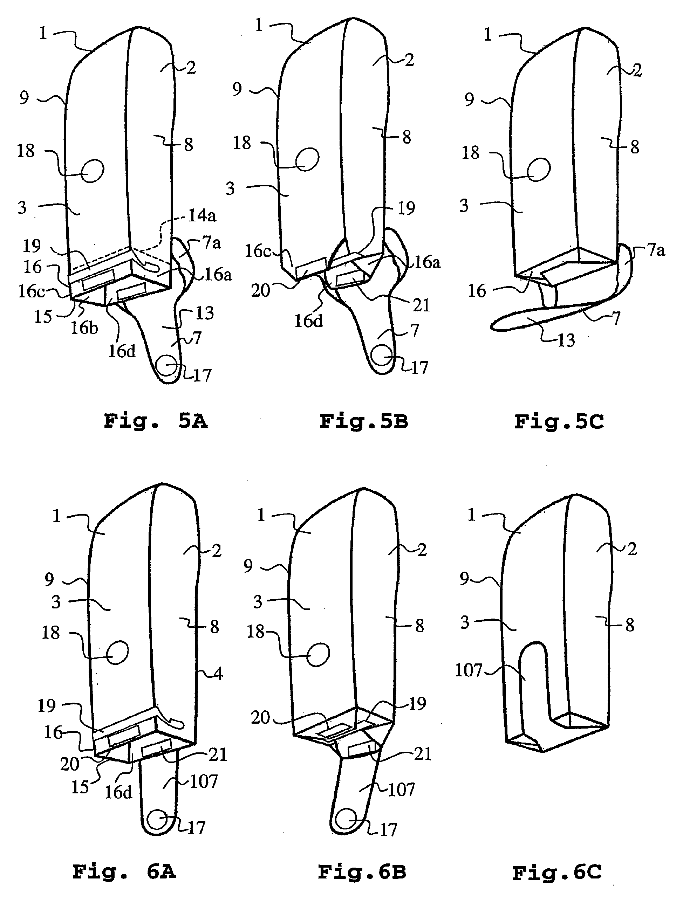

Les figures 5A à 5C illustrent un mode de fermeture de la housse par pliage de la portion libre. Une fois l'appareil 14 introduit dans l'étui 1, les pans latéraux 16a, 16b de la portion libre 16 sont rabattus l'un vers l'autre contre le bord inférieur de l'appareil, puis les pans postérieur 16c et antérieur 16d sont rabattus l'un vers l'autre, en se chevauchant, contre les pans latéraux. Le bord inférieur de l'appareil définissant la portion libre est représenté schématiquement par la ligne en pointillé référencée 14a sur la figure 5A. Le maintien de la portion libre 16 dans cette position pliée est alors assuré en appliquant le rabat 7 tel que décrit précédemment, avec fixation de la languette 13 sur la face postérieure 3 au moyen du système de type «Velcro» à deux éléments 17, 18, l'un à boucles, l'autre à crochets.

Pour faciliter l'opération de pliage, la housse 2 est munie d'une sangle élastique 19 fixée par ses extrémités aux pans latéraux 16a, 16b, à distance du bord libre définissant l'ouverture inférieure 15 de la housse. Par ailleurs, il est prévu un système de fixation à deux éléments 20, 21 (figure 5B) de type « Velcro » sur les pans postérieur 16c et antérieur 16d pour les maintenir en position pliée avant de rabattre le rabat 7, l'un des éléments 21 étant fixé sur la surface interne d'un premier pan 16d et l'autre 20 étant fixé sur la surface externe du deuxième pan 16c.

Après insertion de l'appareil dans la housse, en ayant préalablement écarté latéralement la sangle élastique 19 de l'ouverture 15 tel qu'illustrée sur la figure 5A, la sangle élastique ramène automatiquement les pans latéraux 16a,b contre le bord inférieur de l'appareil tel qu'illustré à la figure 5B. Les pans postérieur 16c et antérieur 16d sont alors plaqués contre les pans latéraux et assemblés l'un à l'autre par leurs portions qui se chevauchent au moyen du système de fixation 20, 21, tel qu'illustré à la figure 5C. le rabat 7 peut ensuite être aisément rabattu pour assurer le maintien de la portion libre dans sa position pliée et compléter l'étanchéité de la fermeture.

Les figures 6A à 6C illustrent une variante du premier mode de réalisation décrit précédemment, dans lequel le rabat 107 est constitué par une simple languette disposée dans le prolongement de la face antérieure 4, plus précisément dans le prolongement du pan libre 16d de la face antérieure définie lorsque l'appareil est introduit dans la housse. La languette 107 et la housse sont par exemple réalisées d'une seule pièce. La languette 107 présente à son extrémité libre l'un des éléments du système de fixation 17, 18 de type «Velcro». La fermeture de la housse 2 est alors réalisée par pliage des pans latéraux et des pans postérieur et antérieur après insertion de l'appareil tel que décrit précédemment à propos des figures 5a à 5b. Les pans latéraux sont amenés de manière automatique contre le bord inférieur de l'appareil et le pan postérieur est appliqué manuellement contre les pans latéraux tel qu'illustré à la figure 6B. Ensuite le pan antérieur 16d est plié et fixé sur le pan postérieur au moyen du système de fixation 20, 21, et la languette 107, disposée dans le prolongement du pan antérieur est fixée par son extrémité sur la face antérieure. Dans cette variante de réalisation, le rabat 107 ne recouvre pas la totalité de la partie inférieure de l'étui. Il permet de maintenir le pliage de la portion libre, ledit pliage assurant l'étanchéité de l'étui.

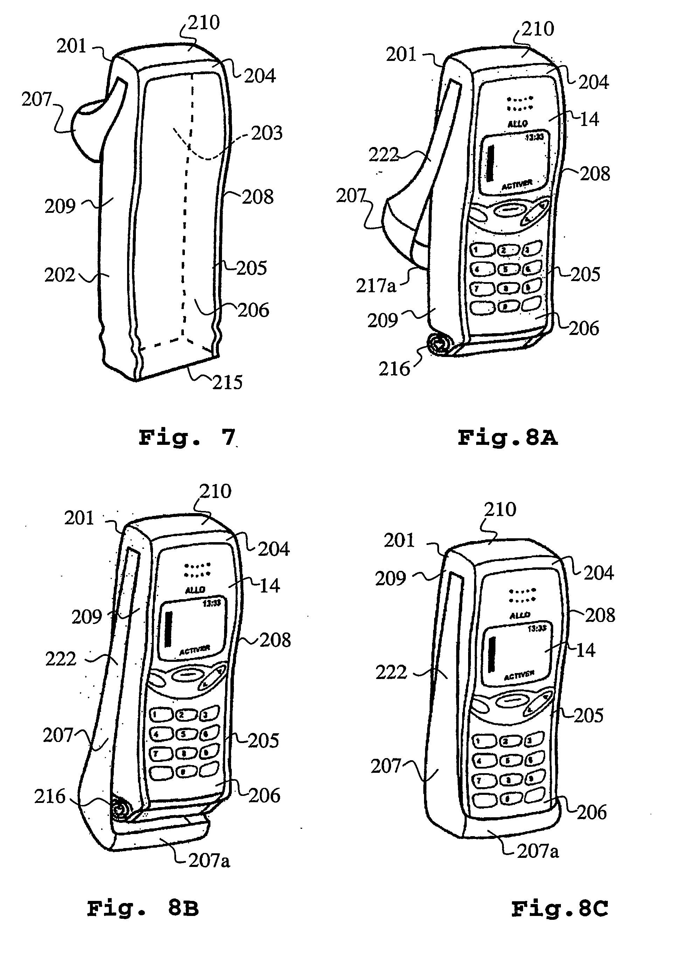

La figure 7 illustre un deuxième mode de réalisation d'un étui 201 selon l'invention. Dans ce mode de réalisation, la face antérieure 204 de la housse 202 comprend une ouverture 205 qui s'étend jusqu'à son bord inférieur délimitant l'ouverture inférieure 215 de la housse. L'ouverture 205 est entièrement obturée par une fenêtre transparente 206, de sorte que cette dernière présente un bord délimitant l'ouverture inférieure 215.

En référence aux figures 8A à 8C, le rabat 207 est formé de deux bretelles élastiques latérales 222 reliées entre elles par une partie évasée ou évasement 207a formant une poche. La poche présente, d'une manière générale, un fond entouré d'une paroi latérale à laquelle sont reliées les bretelles 222. Les bretelles sont fixées par leur extrémité libre sur les faces latérales 208, 209 de la housse, à proximité de la partie supérieure 210.

La housse 202 et le rabat 207 sont constitués d'un matériau élastique obtenu par enduction de polyuréthanne (PU) sur un tissu et la fenêtre 206 est constituée de PU transparent. A titre d'exemple, la housse est constituée d'une trame de polyamide enduite de polyuréthanne, tel que le produit dit bi-élastique, commercialisé par la Société Plastibert sous la référence BIELA00, et la fenêtre est réalisée à partir d'un film polyuréthanne tel que celui commercialisé par la Société Wolff Walsrode AG, sous les marques Walopur® et Platilon® U et la référence 4201 AU.

La housse 202 peut être réalisée tel que décrit précédemment, à partir d'une seule pièce plane de tissu enduit de PU, par pliage et soudure haute fréquence, avec le tissu orienté vers l'intérieur de la housse, les lignes de soudure venant se disposer au niveau de la partie supérieure 210 et la partie latérale 209. Bien entendu, la housse peut également être obtenue par soudure haute fréquence de deux pièces planes, avec des lignes de soudure au niveau des deux parties latérales 208, 209 et de la partie supérieure 210, par soudure haute fréquence d'une seule pièce sous forme de gaine, avec une ou plusieurs lignes de soudure au niveau de la partie supérieure.

La fenêtre 206 et les bretelles 222 sont fixées par soudure haute fréquence respectivement aux faces latérales 208, 209 et à la face antérieure 204. Tel qu'illustré sur la figure 7, la fenêtre transparente remplace la majeure partie de la face antérieure, cette dernière étant limitée à une simple bande s'étendant autour de la fenêtre, de largeur suffisante pour réaliser la soudure.

Dans une variante de réalisation, la housse est obtenue à partir d'une première pièce plane de tissu formant la face postérieure et les parties latérales et d'une deuxième pièce plane de tissu thermosoudée à la première pièce de manière à former une poche constituant la partie supérieure et la face antérieure. La fenêtre transparente est thermosoudée aux parties latérales et à la face antérieure de la housse.

La housse 202 est enfilée sur l'appareil par son ouverture 215. En raison de son élasticité, la housse épouse la forme de l'appareil 14. Cette opération d'insertion est facilitée par la trame de tissu de la housse en contact avec l'appareil et contre laquelle l'appareil peut glisser. La housse est tendue sur l'appareil et la portion libre 216 est enroulée, tel qu'illustré sur la figure 8A. Cet enroulement est réalisé en amenant la fenêtre 206 contre la face postérieure, éventuellement après pliage des faces latérales vers l'intérieur, puis en les enroulant ensemble. Le bord libre définissant de l'ouverture 215 de la housse sera de préférence ramené vers l'intérieur de la housse pour former un repli, de sorte que lors de l'enroulement, la fenêtre en PU vient en contact avec la couche d'enduction de la housse également en PU. Un tel contact entre matière plastique, en particulier PU/PU, garantira une meilleure étanchéité qu'un contact PU/ trame. Ce repli peut être réalisé par l'utilisateur lors de la mise en place de l'étui. Le repli peut également être prévu lors de la fabrication de l'étui, le repli étant alors thermosoudé pour former un ourlet.

Tel que représenté à la figure 8B, l'évasement ou poche 207a est ensuite déplacée manuellement vers le bas en exerçant une force de traction sur les bretelles élastiques 222 pour l'amener dans la positon illustrée à la figure 8C, dans laquelle elle recouvre la portion enroulée ainsi qu'une portion inférieure de la housse qui est plaquée contre l'appareil. Dans cette position, les bretelles sont disposées contre les faces latérales.

Dans ce mode de réalisation, la fenêtre 206 ne présente pas de limite inférieure. Ainsi, l'étui s'adapte à toutes les longueurs d'appareil, quelle que soit la disposition des touches de l'appareil 14 rapport à son bord inférieur. Par ailleurs, la fixation haute des bretelles et leur élasticité garantissent un bon plaquage de la poche contre la portion enroulée pour maintenir cette dernière, et ceci pour des longueurs d'appareil différentes. Bien entendu, la portion libre pourra être pliée au lieu d'être enroulée. Pour ce faire, le système à bretelles pourra être combiné avec le système à languette des figures 6A à 6C.

Dans une variante de réalisation les bretelles du rabat sont fixées sur la partie supérieure de la housse, celles-ci venant se tendre contre la partie supérieure et les faces latérales lorsque la poche en extrémité recouvre la bas de l'étui.

Pour les appareils munis d'antenne extérieure, il peut être prévu sur la housse 202 au moins une excroissance apte à recevoir l'antenne, afin de garantir un plaquage parfait de la housse contre l'appareil. Une fente ou un trou peut alors être prévu sur l'une des deux bretelles fixées à la partie supérieure pour le passage de l'antenne recouverte de l'excroissance. Si l'appareil ne possède pas d'antenne extérieure, l'excroissance non utilisée reste intercalée entre la bretelle et la partie supérieure, sans nuire à esthétisme de l'ensemble. Pour s'adapter aux positions gauche et droite des antennes, la housse peut présenter deux excroissances en association avec une fente sur chaque bretelle.

L'élasticité même du matériau constituant la housse, tel que le produit précité la Société Plastibert, peut assurer un bon plaquage de la housse autour de l'antenne extérieure, sans qu'une telle excroissance soit nécessaire.

Par ailleurs, une bagué peut être intercalée entre la paroi interne de la housse et le microphone de l'appareil, en particulier dans le cas de téléphones portables munis de microphones formant une protubérance sur le boîtier du téléphone. La bague évite que la housse soit plaquée contre le microphone et permet de maintenir un espace d'air entre la housse et le microphone pour garantir son bon fonctionnement. Une telle bague, par exemple en matière plastique, peut être positionnée par l'utilisateur ou être prévue lors de la fabrication de l'étui sur la face interne de la housse.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Etui pour appareils électroniques mobiles présentant des géométries variables comprenant :
- une housse (2, 202) en matériau étanche élastique souple comprenant une face postérieure (3, 203), une face antérieure (4, 204) comprenant une ouverture (5, 205), une partie supérieure (10, 210), une partie inférieure ouverte (15, 215), une première (8, 208) et une seconde (9, 209) parties latérales,
- une fenêtre en matériau souple, étanche et transparent (6, 206) fixée sur l'ouverture (5, 205) de la face antérieure (4, 204) de manière étanche, et
- un rabat (7, 107, 207) assemblé à la housse pour fermer la partie inférieure ouverte,
**caractérisé en ce que** ladite housse présente une portion inférieure libre (16, 216) s'étendant au-delà de l'appareil (14) à protéger lorsque ledit appareil est inséré dans la housse par ladite partie inférieure ouverte, ledit rabat étant apte à maintenir la portion inférieure libre contre l'appareil sous forme pliée ou enroulée pour fermer la partie inférieure ouverte de manière étanche.

2. Etui selon la revendication 1, **caractérisé en ce que** la fenêtre transparente (206) s'étend jusqu'à la partie inférieure ouverte (215) de la housse.

3. Etui selon la revendication 1 ou 2, **caractérisé en ce que** le rabat (107) comprend une languette dans le prolongement de la face antérieure, munie à son extrémité libre de moyens de fixation (17) pour sa fixation réversible sur la face postérieure (3) de la housse (2) de sorte que la dite languette maintienne la portion libre (16) sous forme pliée.

4. Etui selon la revendication 1 ou 2, **caractérisé en ce que** le rabat (7) comprend une partie intermédiaire (7a) assemblée sur la partie inférieure de la face antérieure (4) et destinée à venir contre la portion libre (16), suivi d'une languette (13) destinée à s'appliquer sur la face postérieure (3) de la housse de façon à maintenir ladite partie intermédiaire contre la portion libre.

5. Etui selon l'une des revendications 1 à 3, **caractérisé en ce que** le rabat (207) comprend deux bretelles élastiques (22) fixées par une première extrémité sur la housse (202) et reliées entre elles à leur seconde extrémité par une partie intermédiaire (207a) apte à venir s'appliquer contre la portion libre de la housse, sous l'effet du rappel élastique des bretelles.

6. Etui selon la revendication 4 ou 5, **caractérisé en ce que** ladite partie intermédiaire (7a, 207a) est constituée d'un évasement destiné à emmailloter la partie inférieure de la housse.

7. Etui selon l'une des revendications 1 à 6, **caractérisé en ce que** la housse (2) comprend une sangle élastique (19) fixée par ses extrémités aux faces latérales (8, 9) pour faciliter le pliage de la portion libre (16) avant la mise en place du rabat (7).

8. Etui selon l'une des revendications 1 à 7, **caractérisé en ce que** la housse (2, 202) et/ou le rabat (7, 107, 207) sont constitués en un matériau comprenant du polyuréthanne et/ou du polychlorure de vinyle.

9. Etui selon l'une des revendications 1 à 8, **caractérisé en ce que** la fenêtre (5) est constituée en un matériau transparent choisi parmi un polychlorure de vinyle ou un polyuréthanne.

10. Etui selon l'une des revendications 1 à 9, **caractérisé en ce que** la housse comprend au moins une excroissance (11) sensiblement de la forme d'un doigt et disposée sur sa partie supérieure (10).

## Claims

1. Case for mobile electronic devices having variable geometries, including:
- a cover (2, 202) made of flexible elastic impermeable material having a rear surface (3, 203), a front surface (4, 204) including an opening (5, 205), an upper part (10, 210), an open lower part (15, 215), and a first (8, 208) and a second (9, 209) side part,
- a window (6, 206) made of flexible, waterproof and transparent material fastened to the opening (5, 205) in the front surface (4, 204) in a waterproof manner, and
- a flap (7, 107, 207) fitted to the cover in order to close the open lower part,
**characterized in that** said cover has a free lower portion (16, 216) extending beyond the device (14) to be protected when said device is inserted into the cover via said open lower part, said flap being able to hold the free lower portion against the device in a folded or wound form in order to close the open lower part in a sealed manner.

2. Case according to Claim 1, **characterized in that** the transparent window (206) extends as far as the open lower part (215) of the cover.

3. Case according to Claim 1 or 2, **characterized in that** the flap (107) includes a tab extending in line with the front surface, provided at its free end with fastening means (17) for reversibly fastening it to the rear surface (3) of the cover (2) such that said tab holds the free portion (16) in the folded form.

4. Case according to Claim 1 or 2, **characterized in that** the flap (7) includes an intermediate part (7a) that is fitted on the lower part of the front surface (4) and is intended to bear against the free portion (16), followed by a tab (13) intended to be applied to the rear surface (3) of the cover so as to hold said intermediate part against the free portion.

5. Case according to one of Claims 1 to 3, **characterized in that** the flap (207) includes two elastic straps (22) fastened at one end to the cover (202) and connected together at their other end by an intermediate part (207a) able to be applied to the free portion of the cover under the spring-back effect of the straps.

6. Case according to Claim 4 or 5, **characterized in that** said intermediate part (7a, 207a) consists of a flare intended to envelop the lower part of the cover.

7. Case according to one of Claims 1 to 6, **characterized in that** the cover (2) includes an elastic strap (19) fastened at its ends to the side surfaces (8, 9) in order to aid the folding of the free portion (16) before the flap (7) is positioned.

8. Case according to one of Claims 1 to 7, **characterized in that** the cover (2, 202) and/or the flap (7, 107, 207) is/are made of a material comprising polyurethane and/or polyvinyl chloride.

9. Case according to one of Claims 1 to 8, **characterized in that** the window (5) is made of a transparent material selected from a polyvinyl chloride or a polyurethane.

10. Case according to one of Claims 1 to 9, **characterized in that** the cover includes at least one approximately finger-shaped protuberance (11) on its upper part (10).

## Patentansprüche

1. Etui für elektronische Mobilgeräte mit veränderlicher Geometrie, enthaltend:
- eine Hülle (2, 202) aus elastisch nachgiebigem dichten Material mit einer Rückseite (3, 203), einer Vorderseite (4, 204) mit einer Öffnung (5, 205), einem Oberteil (10, 210), einem offenen Unterteil (15, 215), einem ersten (8, 208) und einem zweiten (9, 209) Seitenteil,
- ein Fenster aus transparentem nachgiebigen dichten Material (6, 206), das an der Öffnung (5, 205) der Vorderseite (4, 204) aus dichtem Material befestigt ist, und
- eine Umschlagklappe (7, 107, 207), die an die Hülle angefügt ist, um das offene Unterteil zu verschließen,
**dadurch gekennzeichnet, dass** die Hülle einen freien unteren Abschnitt (16, 216) aufweist, der sich über das zu schützende Gerät (14) hinaus erstreckt, wenn das Gerät über das offene Unterteil in die Hülle eingeführt ist, wobei die Umschlagklappe in der Lage ist, den freien unteren Abschnitt in gefalteter oder aufgerollter Form am Gerät zu halten, um das offene Unterteil in dichter Weise zu verschließen.

2. Etui nach Anspruch 1, **dadurch gekennzeichnet, dass** das transparente Fenster (206) sich bis zum offenen Unterteil (215) der Hülle erstreckt.

3. Etui nach Anspruch 1 oder 2, **dadurch gekennzeichnet, dass** die Umschlagklappe (107) eine Zunge in Verlängerung der Vorderseite aufweist, die an ihrem freien Ende mit Befestigungsmitteln (17) versehen ist, um sie lösbar an der Rückseite (3) der Hülle (2) zu befestigen, so dass die Zunge den freien Abschnitt (16) in gefalteter Form festhält.

4. Etui nach Anspruch 1 oder 2, **dadurch gekennzeichnet, dass** die Umschlagklappe (7) ein Zwischenteil (7a) aufweist, das an das Unterteil der Vorderseite (4) angefügt und dazu bestimmt ist, an den freien Abschnitt (16) zu treten, gefolgt von einer Zunge (13), die dazu bestimmt ist, sich an die Rückseite (3) der Hülle anzulegen, so dass das Zwischenteil am freien Abschnitt gehalten wird.

5. Etui nach einem der Ansprüche 1 bis 3, **dadurch gekennzeichnet, dass** die Umschlagklappe (207) zwei elastische Riemen (22) aufweist, die mit einem ersten Ende an der Hülle (202) befestigt und an ihrem zweiten Ende über ein Zwischenteil (207a) miteinander verbunden sind, das sich unter der Wirkung der elastischen Rückstellkraft der Riemen an den freien Abschnitt der Hülle anlegen kann.

6. Etui nach Anspruch 4 oder 5, **dadurch gekennzeichnet, dass** das Zwischenteil (7a, 207a) aus einer Erweiterung besteht, die dazu bestimmt ist, das Unterteil der Hülle zu umgreifen.

7. Etui nach einem der Ansprüche 1 bis 6, **dadurch gekennzeichnet, dass** die Hülle (2) einen elastischen Gurt (19) aufweist, der mit seinen Enden an den Seitenflächen (8, 9) befestigt ist, um das Umfalten des freien Abschnitts (16) vor dem Einsetzen der Umschlagklappe (7) zu erleichtern.

8. Etui nach einem der Ansprüche 1 bis 7, **dadurch gekennzeichnet, dass** die Hülle (2, 202) und/oder die Umschlagklappe (7, 107, 207) aus einem polyurethan- und/oder polyvinylchloridhaltigen Material bestehen.

9. Etui nach einem der Ansprüche 1 bis 8, **dadurch gekennzeichnet, dass** das Fenster (5) aus einem transparenten Material ausgewählt aus einem Polyvinylchlorid oder einem Polyurethan besteht.

10. Etui nach einem der Ansprüche 1 bis 9, **dadurch gekennzeichnet, dass** die Hülle zumindest einen Vorsprung (11) im wesentlichen in Form eines Fingers aufweist, der an ihrem Oberteil (10) angeordnet ist.
